# EUROPEAN PATENT APPLICATION

(11) **EP 4 571 912 A1**
(43) Date of publication of application: **18.06.2025**
(21) Application number: 24807374.4
(22) Date of filing: 16.04.2024
(51) Int. Cl.: H01M 10/04, H01M 50/204, H01M 50/258, H01M 10/058

(54) **DEVICE FOR MANUFACTURING BATTERY MODULE AND METHOD FOR MANUFACTURING BATTERY MODULE**

(30) Priority: 16.05.2023 KR 20230063347; 08.04.2024 KR 20240047135
(71) Applicant: LG Energy Solution, Ltd., Seoul 07335 (KR)
(72) Inventor: KIM, Seong-Ho, Daejeon 34122 (KR); JI, Hyun-Jin, Daejeon 34122 (KR); KANG, Choon-Kwon, Daejeon 34122 (KR); PARK, Hyeong-Min, Daejeon 34122 (KR); CHO, Sun-Min, Daejeon 34122 (KR)
(74) Representative: Goddar, Heinz J.
(86) International application number: PCT/KR2024/005079
(87) International publication number: WO 2024/237494

(57) **Abstract**

An apparatus for manufacturing a battery module according to the present disclosure includes a stack die on which a unit cell group is mounted, the unit cell group including a plurality of battery cells and a cooling tube attached to the plurality of battery cells; a press unit configured to press a plurality of the unit cell groups and a spacer disposed between the unit cell group and the adjacent unit cell group in a direction; and an alignment unit configured to align upper surfaces of the battery cells to a same height by moving the battery cells up/down.

## Description

### TECHNICAL FIELD

The present disclosure relates to an apparatus and method for manufacturing a battery module, and more particularly, to an apparatus and method for manufacturing a battery module with assembly convenience by pressing a battery module assembly including a plurality of battery cells, a cooling tube and a spacer and easily aligning top datum by an automated equipment. The present application claims priority to Korean Patent Application No. 10-2023-0063347 filed on May 16, 2023 and Korean Patent Application No. 10-2024-0047135 filed on April 8, 2024 in the Republic of Korea, the disclosures of which are incorporated herein by reference.

### BACKGROUND

Recently, there has been a dramatic increase in demand for portable electronic products such as laptop computers, video cameras and mobile phones, and with the extensive development of electric vehicles, accumulators for energy storage, robots and satellites, many studies are being made on high performance secondary batteries that can be recharged repeatedly.

Currently, commercially available secondary batteries include nickel-cadmium batteries, nickel-hydrogen batteries, nickel-zinc batteries, lithium secondary batteries and the like. Among them, lithium secondary batteries have little or no memory effect, and thus they are gaining more attention than nickel-based batteries for their advantages that recharging can be done whenever it is convenient, the self-discharge rate is very low and the energy density is high.

Lithium secondary batteries primarily use lithium-based oxide and carbon materials as a positive electrode active material and a negative electrode active material, respectively. Additionally, a lithium secondary battery includes an electrode assembly including a positive electrode plate and a negative electrode plate respectively coated with the positive electrode active material and the negative electrode active material with a separator interposed between the positive electrode plate and the negative electrode plate, and an outer packaging material accommodating the electrode assembly and an electrolyte solution in an air-tight manner.

Lithium secondary batteries may be classified into pouch-type secondary batteries in which the electrode assembly is included in a pouch of an aluminum laminate sheet and can-type secondary batteries in which the electrode assembly is included in a metal can, according to the shape of a battery case. Additionally, the can-type secondary batteries may be sub-classified into cylindrical batteries and prismatic batteries, according to the shape of the metal can.

Lithium secondary batteries may be used in battery module or battery pack applications by arranging battery cells themselves or in a cartridge and stacking densely into a closest packed structure and electrically connecting them, in order to provide high voltage and high current.

Taking cylindrical batteries as an example, cylindrical batteries may be arranged in a line to form an array, and a cooler may be placed between two arrays to circulate a cooling medium between them to form a unit cell group.

Conventionally, however, a process of assembling a plurality of unit cell groups into a battery module or a battery pack includes manual pressing and bolting, failing to ensure uniform level of close packing between battery cells due to non-constant pressing forces, causing errors in the assembly process depending on the level of skill in the operation, resulting in low assembly reliability.

Another disadvantage is low efficiency in a top datum alignment operation of aligning the upper surfaces (negative electrode surfaces) of the cylindrical batteries to the same height for a welding process during or in the middle of the process of pressing the plurality of unit cell groups in a direction, resulting in long tact time and low productivity.

Accordingly, there is an urgent need for a manufacturing equipment for pressing a plurality of unit cell groups by an automated machine to ensure assembly reliability and easily aligning the upper surfaces of battery cells for welding to ensure assembly convenience and improve productivity.

### SUMMARY

### Technical Problem

The present disclosure is designed to solve the above-described problems, and therefore the present disclosure is directed to providing an apparatus and method for manufacturing a battery module in which a plurality of unit cell groups is pressed with a constant force by an automated machine to achieve uniform level of close packing between battery cells and reduce the error rate, leading to improved assembly reliability.

The present disclosure is further directed to providing an apparatus and method for manufacturing a battery module with high efficiency in operation, assembly convenience and improved productivity by automation of a top datum alignment operation of aligning upper surfaces (negative electrode surfaces) of battery cells to the same height for a welding process during or in the middle of the process of pressing the plurality of unit cell groups in a direction.

The technical problems of the present disclosure are not limited to the above-described problems and these and other problems will be clearly understood by those skilled in the art from the following description.

### Technical Solution

An apparatus for manufacturing a battery module according to the present disclosure includes a stack die on which a unit cell group is mounted, the unit cell group including a plurality of battery cells and a cooling tube attached to the plurality of battery cells; a press unit configured to press a plurality of the unit cell groups and a spacer disposed between the unit cell group and the adjacent unit cell group in a direction; and an alignment unit configured to align upper surfaces of the battery cells to a same height by moving the battery cells up/down.

The alignment unit may be configured to move the unit cell group up/down with respect to the spacer.

The alignment unit may include a stopper block, and the stopper block may be disposed above the stack die and may move up/down with respect to the stack die.

The alignment unit may further include at least one lift rod having one end that is moved up/down by an actuation unit, and other end that contacts a lower surface of the unit cell group.

The lift rod may move the unit cell group up.

The stopper block may move down and come into contact with the upper surface of the unit cell group to stop the unit cell group from moving up during the operation of the lift rod.

The battery cell may have a tab portion on the upper surface, the tab portion being protruded upward, and the stopper block may have a recessed portion on the bottom surface to prevent a direct contact with the tab portion, the recessed portion being recessed inward.

The press unit may include a press block, and the press block may have a convex protrusion portion to match a shape of one surface of the spacer.

The stack die may include a stopper plate bent on one side of a die body to form a reference surface when pressing the plurality of unit cell groups and the spacer in a direction; a cell mounting portion formed to match a shape of a bottom of the unit cell group and on which the unit cell group is mounted; and a spacer mounting portion disposed adjacent to the cell mounting portion and on which the spacer is mounted.

The die body may have a slot through which the lift rod passes.

A height of a top surface of the spacer mounting portion may be lower than that of the cell mounting portion.

An alignment origin block may be disposed on one side of the spacer in a length direction, and the stack die may have an origin block accommodating portion accommodating the alignment origin block.

In an embodiment of the present disclosure, the battery cell may be a cylindrical secondary battery, the plurality of battery cells may be arranged in a line side by side along a length direction of the battery module to form a cell array, the unit cell group may include a pair of cell arrays and the cooling tube disposed between the pair of cell arrays, the spacer may have a concave recess portion on each of one surface and other surface in the length direction to match an external shape of the unit cell group, an alignment origin block may be disposed on one side in the length direction, a front stopper may be disposed at a front side of the stack die, and an origin block accommodating portion accommodating the alignment origin block may be disposed at a rear side of the stack die.

In an embodiment of the present disclosure, the stack die may be disposed on a support having a plurality of die alignment protrusions.

In an embodiment of the present disclosure, the stack die may include a stopper plate on one side of the die body to form a reference surface when pressing the plurality of unit cell groups and the spacer in a direction, the press unit may include a press block on other side of the die body to press the plurality of unit cell groups and the spacer against the stopper plate, and the press block may have a convex protrusion portion to match a shape of one surface of the spacer.

Furthermore, according to the present disclosure, there is provided a method for manufacturing a battery module, including a preparation step of preparing a unit cell group including battery cells and a cooling tube between the battery cells; a mounting step of mounting a plurality of spacers and a plurality of the unit cell groups on a stack die; a pressing step of pressing the plurality of spacers and the plurality of unit cell groups in a direction through a press unit; and an alignment step of aligning, by an alignment unit, upper surfaces of the battery cells by moving the unit cell group up/down.

Before the pressing step is completed, the alignment step may be performed.

The pressing step may be performed by moving a press block of the press unit from one side of the plurality of unit cell groups and the plurality of spacers in a state that a reference surface for the plurality of unit cell groups and the plurality of spacers is provided.

The alignment step may be performed by moving the unit cell group up/down with respect to the spacer by operation of a lift rod of the alignment unit on a lower surface of the unit cell group.

The method for manufacturing the battery module according to the present disclosure may be performed using the apparatus for manufacturing the battery module according to the present disclosure.

### Advantageous Effects

According to an aspect of the present disclosure, the plurality of unit cell groups may be mounted on the stack die, then pre-aligned and pressed through the press unit, thereby achieving uniform level of close packing between battery cells and reducing the error rate, leading to improved assembly reliability.

Additionally, according to an aspect of the present disclosure, it may be possible to increase efficiency in operation, ensure assembly convenience and improve productivity by automation of the top datum alignment operation of aligning the upper surfaces (negative electrode surfaces) of battery cells to the same height for a welding process during or in the middle of the process of pressing the plurality of unit cell groups in a direction.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the accompanying drawings.
FIG. 1 is a schematic perspective view of the main components of an apparatus for manufacturing a battery module according to an embodiment of the present disclosure.
FIG. 2 is an exploded perspective view of FIG. 1.
FIG. 3 is a diagram showing a unit cell group including battery cells and a cooling tube and a spacer supplied to an apparatus for manufacturing a battery module according to an embodiment of the present disclosure.
FIG. 4 is a perspective view of a stack die in an apparatus for manufacturing a battery module according to an embodiment of the present disclosure.
FIG. 5 is a top view showing a plurality of unit cell groups and a press unit on a stack die in an apparatus for manufacturing a battery module according to an embodiment of the present disclosure.
FIG. 6 is a partial side view of a unit cell group and an alignment unit in an apparatus for manufacturing a battery module according to an embodiment of the present disclosure.
FIG. 7 is a diagram showing a press unit that presses a unit cell group mounted on a stack die in an apparatus for manufacturing a battery module according to an embodiment of the present disclosure.
FIG. 8 is a diagram schematically showing the operation of an alignment unit on a unit cell group in an apparatus for manufacturing a battery module according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure by way of illustration and are not intended to be limiting, and thus it should be understood that a variety of other equivalents and modifications could have been made at the time the application was filed.

In the drawings, the size of each element or a particular part of the element is exaggerated, omitted or schematically shown for convenience and clarity of description. Accordingly, the size of each element does not totally reflect the actual size. When it is determined that a detailed description of related known functions or elements may unnecessarily obscure the subject matter of the present disclosure, the description is omitted.

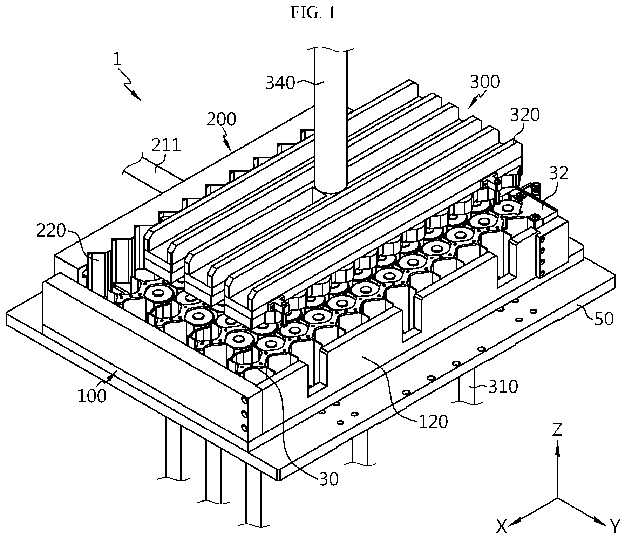

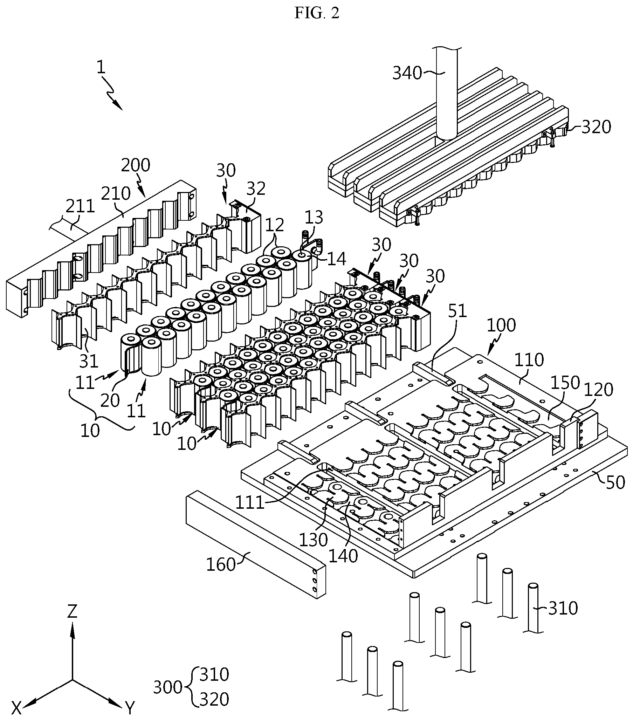

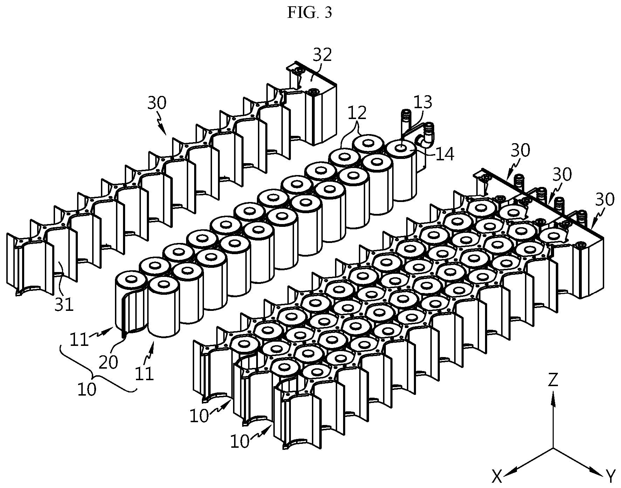

FIG. 1 is a schematic perspective view of the main components of an apparatus for manufacturing a battery module according to an embodiment of the present disclosure, FIG. 2 is an exploded perspective view of FIG. 1, and FIG. 3 is a diagram showing a unit cell group including battery cells and a cooling tube and a spacer supplied to the apparatus for manufacturing the battery module according to an embodiment of the present disclosure.

First, referring to FIGs. 1 and 2, the apparatus 1 for manufacturing the battery module according to an embodiment of the present disclosure includes a stack die 100 on which the unit cell group 10 is mounted, the unit cell group 10 including the plurality of battery cells 12 and the cooling tube 20 attached to the plurality of battery cells 12; a press unit 200 to press a plurality of unit cell groups 10 and the spacer 30 disposed between the unit cell group 10 and the adjacent unit cell group 10 in a direction; and an alignment unit 300 to align upper surfaces 14 of the battery cells 12 to the same height by moving the battery cells 12 up/down.

The stack die 100 may be disposed on a support 50. The support 50 may have a plurality of die alignment protrusions 51. The unit cell group 10 may be mounted on the stack die 100. The unit cell group 10 may include the plurality of battery cells 12.

The plurality of battery cells 12 is a secondary battery, and may include a cylindrical secondary battery, a pouch-type secondary battery or a prismatic secondary battery. Hereinafter, this embodiment is described based on the plurality of battery cells 12 as a cylindrical secondary battery as shown in FIGs. 2 and 3. The battery cells 12 may be a plurality of cylindrical secondary batteries arranged in the horizontal direction and standing upright in the vertical direction.

Referring to FIGs. 2 and 3, the battery cell 12 may have a tab portion 13 and an upper surface 14 on top. The tab portion 13 may have a first polarity, and the upper surface 14 may have a second polarity. The tab portion 13 and the upper surface 14 may be electrically insulated from each other. The first polarity may be the positive polarity of the battery cell 12, and the second polarity may be the negative polarity of the battery cell 12. That is, the tab portion 13 may be a positive electrode portion of the battery cell 12, and the upper surface 14 may be a negative electrode portion of the battery cell 12. The tab portion 13 may be extended over the upper surface 14. Alternatively, according to manufacturers, the tab portion 13 may not be extended over the upper surface 14. For example, the battery cell 12 may be a so-called tab-less structure in which the tab portion 13 and the upper surface are on the same plane. The battery cell 12 may include an electrode assembly (not shown) and a battery can accommodating the electrode assembly. The components of the battery cell 12 are well known to those skilled in the art at the time the application was filed, and a detailed description is omitted.

A plurality of battery cells 12 may form a cell array 11. That is, the cell array 11 may include the plurality of battery cells 12 arranged in a line side by side along the length direction (X axis direction) of the battery module. The number of battery cells 12 that form the cell array 11 is not limited to a particular range. In the drawings, the cell array 11 including eleven battery cells arranged in the length direction is shown.

Additionally, a plurality of cell arrays 11 may form the unit cell group 10. The unit cell group 10 may include a pair (two) of cell arrays 11 and the cooling tube 20 disposed between the pair of cell arrays 11. The cooling tube 20 cools the battery cells 12 while in contact with one surface of the cell array 11. The cooling tube 20 may have an internal space and be formed with a structure for heat transfer by a flow of cooling medium in the internal space, and a detailed description is omitted. The cell array 11 and the cooling tube 20 may be glued to each other.

The spacer 30 may be disposed between the unit cell group 10 and the adjacent unit cell group 10. The spacer 30 refers to an s-structure that fills the gap between the unit cell group 10 and the adjacent unit cell group 10. As primarily shown in FIGs. 2 and 3, the spacer 30 may have a concave recess portion 31 on each of one surface and the other surface in the length direction to match the external shape of the unit cell group 10. The internal curvature of the concave recess portion 31 or the number of concave recess portions 31 may be determined according to the specification of the external shape of the unit cell group 10 coupled to the spacer 30 such that the shapes are matched to each other.

Additionally, an alignment origin block 32 may be disposed on one side of the spacer 30 in the length direction. The alignment origin block 32 plays a role in making it easy to pre-align the spacer 30 to the stack die 100. Although this embodiment shows that the alignment origin block 32 is disposed on only one side of the spacer 30, the alignment origin block 32 may be disposed on two sides of the spacer 30 if necessary.

As described above, one unit cell group 10 and one spacer 30 may form a unit, and a plurality of unit cell groups 10 and a plurality of spacers 30 may be assembled into a battery module assembly.

Referring to FIG. 2, the plurality of unit cell groups 10 and the plurality of spacers 30 may be mounted and received on the stack die 100. The stack die 100 may have mounting and accommodating structures 130, 140, 150 of many shapes corresponding to the shape of the bottom of the unit cell group 10 and the spacer 30, and its description will be provided below. Additionally, a stopper plate 120 that acts as a reference surface when the unit cell group 10 and the spacer 30 are pressed in a direction by the operation of the press unit 200 may be disposed on one side of the stack die 100.

A front stopper 160 may be disposed at the front side of the stack die 100. The battery module assembly including the plurality of unit cell groups 10 and the plurality of spacers 30 may be received in the mounting portion of the stack die 100, and the gap of the stack die 100 in the front and rear direction (X axis direction) may be minimized by the front stopper 160.

The press unit 200 may be used to press the plurality of unit cell groups 10 and the plurality of spacers 30 between the unit cell groups 10 in a direction. A press block 210 of the press unit 200 may press the plurality of unit cell groups 10 and the plurality of spacers 30 stacked in a sequential order on the upper surface of the stack die 100 in a direction.

The alignment unit 300 may be used to align the upper surfaces 14 of the battery cells 12 to the same height by moving the battery cells 12 up/down. The alignment unit 300 may be configured to move the unit cell group 10 up/down with respect to the spacer 30. That is, the spacer 30 is fixed in the vertical direction (Z axis direction) on the stack die 100 to align the pre-assembled unit cell group 10 in the vertical direction.

The alignment unit 300 may include a stopper block 320 that can move up/down, and substantially makes a down movement. Additionally, the alignment unit 300 may further include a lift rod 310 that can move up/down, and substantially makes an up movement. The stopper block 320 may move down by a connection rod 340. Accordingly, it may be possible to align the upper surfaces 14 (the negative electrode surfaces) of the battery cells 12 to the same height. When the upper surfaces 14 of the battery cells 12 are aligned to the same height, post-processing, for example, welding may be easily performed.

Through the apparatus 1 for manufacturing the battery module as described above, the plurality of unit cell groups 10 may be mounted on the stack die 100, then pre-aligned and pressed by the press unit 200 with a constant force, thereby ensuring uniform level of close packing between the battery cells 12.

Additionally, according to an aspect of the present disclosure, it may be possible to easily perform the top datum alignment operation for a welding process during or in the middle of the process of pressing the plurality of unit cell groups 10 in a direction and a detailed description will be provided below.

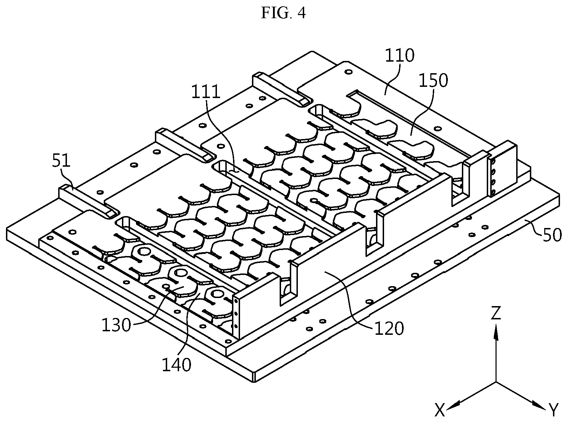

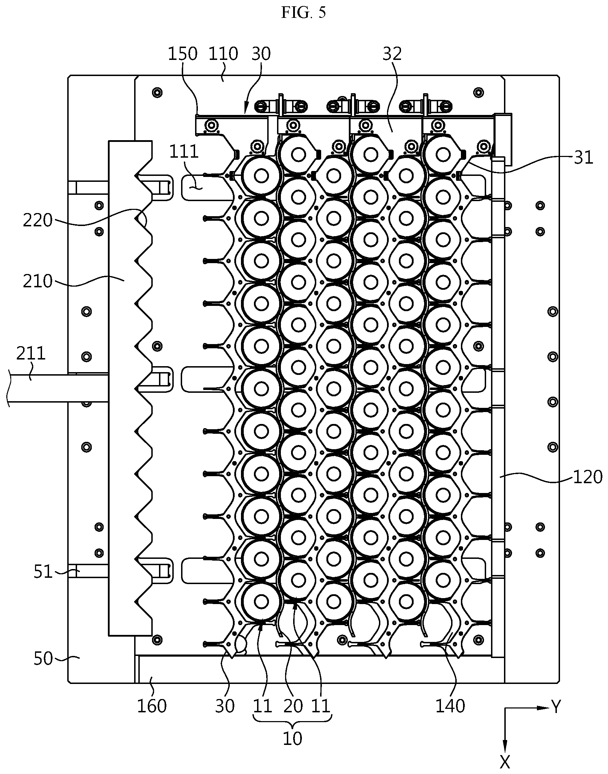

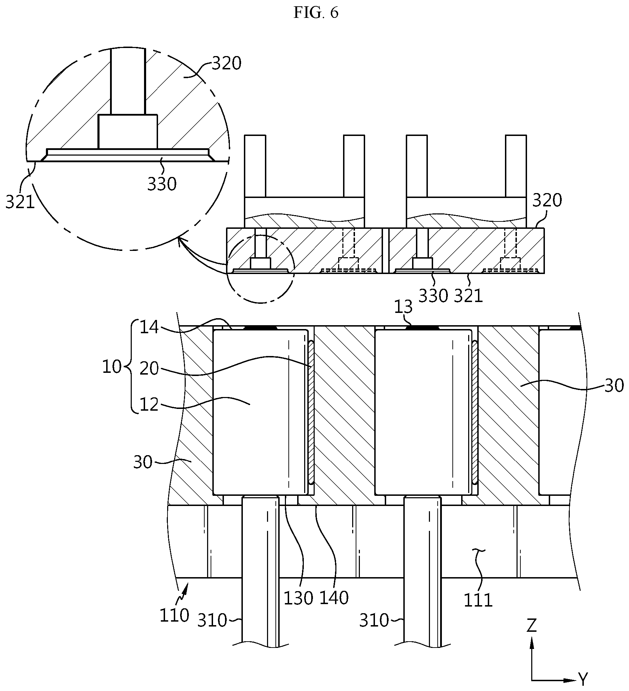

FIG. 4 is a perspective view of the stack die in the apparatus for manufacturing the battery module according to an embodiment of the present disclosure, FIG. 5 is a top view showing the plurality of unit cell groups and the press unit on the stack die in the apparatus for manufacturing the battery module according to an embodiment of the present disclosure, and FIG. 6 is a partial side view of the unit cell group and the alignment unit in the apparatus for manufacturing the battery module according to an embodiment of the present disclosure.

Referring primarily to FIG. 4, the stack die 100 may include the stopper plate 120 bent on one side of a die body 110 to form the reference surface when pressing the plurality of unit cell groups 10 and the plurality of spacers 30 in a direction; a cell mounting portion 130 protruded from the upper surface of the die body 110 and on which the unit cell group 10 is mounted; and a spacer mounting portion 140 disposed adjacent to the cell mounting portion 130 and on which the spacer 30 is mounted.

The stack die 100 may include the die body 110 disposed on the horizontal surface (X-Y plane). The plurality of unit cell groups 10 and the plurality of spacers 30 may be mounted on the upper surface of the die body 110. The die body 110 may have a slot 111 through which the lift rod 310 passes. The slot 111 may be formed in the width direction (Y axis direction) of the battery module, and may include a plurality of slots at a regular interval along the length direction.

The stopper plate 120 may be disposed on one side of the die body 110. The stopper plate 120 may be bent in the vertical direction (Z axis direction) on one side (front end in -X axis direction) of the die body 110 and extended upward from the die body 110.

The stopper plate 120 may be disposed on the opposite side to the press unit 200 to act as a stopper to form the reference surface when pressing the plurality of unit cell groups 10 and the plurality of spacers 30 in a direction.

The cell mounting portion 130 may be disposed on the upper surface of the die body 110. The cell mounting portion 130 may be formed to match the shape of the bottom of the unit cell group 10. The unit cell group 10 may be mounted on the cell mounting portion 130, and the cell mounting portion 130 may be smaller than the size of the bottom of the unit cell group 10. Accordingly, when pressed by the press unit 200, the unit cell group 10 may slightly move in the left-right direction (X axis direction). Additionally, the cell mounting portion 130 may be extended relatively upward between the spacer mounting portions 140.

The spacer mounting portion 140 is disposed adjacent to the cell mounting portion 130 and is where the spacer 30 is mounted. The height of the top surface of the spacer mounting portion 140 may be lower than that of the cell mounting portion 130. That is, the spacer mounting portion 140 may be recessed lower than the cell mounting portion 130. The spacer mounting portion 140 may be formed in a wavy shape to match the shape of the spacer 30. The spacer mounting portion 140 may be larger than the size of the bottom of the spacer 30 to form a predetermined gap in the left-right direction of the spacer 30 mounted on the spacer mounting portion 140.

An origin block accommodating portion 150 accommodating the alignment origin block 32 may be disposed at the rear side of the stack die 100. The origin block accommodating portion 150 may be recessed in the same way as the spacer mounting portion 140 and may have substantially the same height.

Referring primarily to FIG. 5, the press unit 200 may include a press rod 211 and the press block 210 connected to the press rod 211. The press block 210 may have a convex protrusion portion 220. The convex protrusion portion 220 may be formed to match the shape of the concave recess portion 31 of the spacer 30. Although not shown in the drawings, the press unit 200 may include an actuation unit to extend and shrink the press rod 211 to move the press block 210 in the left-right direction.

Accordingly, when mounting the plurality of unit cell groups 10 and the plurality of spacers 30 on the stack die 100, the unit cell group 10 and the spacer 30 may be easily mounted in each of the cell mounting portion 130, the spacer mounting portion 140 and the origin block accommodating portion 150. The pre-alignment of the battery module may be relatively easily performed by the process of mounting the components at each position.

Additionally, after the pre-alignment, the press unit 200 may press with a constant force such that the shapes of the convex protrusion portion 220 of the press block 210 and the concave recess portion 31 of the spacer 30 match each other. Accordingly, it may be possible to achieve uniform level of close packing between the battery cells 12 and reduce the error rate, thereby improving assembly reliability.

The alignment unit 300 is used to align the upper surfaces 14 of the battery cells 12 to the same height by moving the battery cells 12 up/down, and the alignment unit 300 may be configured to move the unit cell group 10 up/down with respect to the spacer 30.

To this end, referring primarily to FIG. 6, the alignment unit 300 may include the stopper block 320 that is disposed above the stack die 100 and moves up/down with respect to the stack die 100.

The stopper block 320 may be disposed above the stack die 100. The stopper block 320 may move down to a predetermined height in the alignment operation. Through the stopper block 320, the unit cell group 10 may move up/down with respect to the spacer 30. In particular, when the unit cell group 10 is higher over the alignment position than the spacer 30, the alignment operation may be effectively performed.

Additionally, the alignment unit 300 may further include at least one lift rod 310 having one end that is moved up/down by the actuation unit and the other end that contacts the lower surface of the unit cell group 10.

The lift rod 310 may pass through the slot 111 of the stack die 100. One end of the lift rod 310 may be moved up/down by the actuation unit (not shown), and the other end may contact the lower surface of the unit cell group 10. Accordingly, when the actuation unit operates for upward movement, the lift rod 310 may be extended upward and the unit cell group 10 in contact with the other end may be moved up. Because the end of the lift rod 310 is connected to a point on the bottom of the unit cell group 10, during the operation of the lift rod 310, the spacer 30 cannot move in the vertical direction and only the unit cell group 10 may be moved up with respect to the spacer 30 and aligned.

The lift rod 310 may include at least one lift rod 310 in view of the weight and the center of mass of the unit cell group 10. Although this embodiment provides three lift rods 310 per each unit cell group 10, the number of lift rods is not limited thereto.

The stopper block 320 may be disposed above the stack die 100. During the alignment operation, the stopper block 320 may move down to the predetermined height. Additionally, by the operation of the lift rod 310, the stopper block 320 may come into contact with the upper surface 14 of the unit cell group 10 to stop the unit cell group 10 from moving up. The stopper block 320 may include a plurality of stopper blocks corresponding to the number of battery cells 12 to come into contact with the upper surface 14 of each battery cell 12. The stopper block 320 may have a recessed portion 330 that is recessed inward on a bottom surface 321 thereof to prevent the direct contact with the tab portion 13.

The alignment unit 300 as described above may be configured to move the unit cell group 10 up/down with respect to the spacer 30. That is, the stopper block 320 alone or in conjunction with the lift rod may be used to move the unit cell group 10 up/down with respect to the spacer 30. Accordingly, the spacer 30 is fixed in the vertical direction (Z axis direction) on the stack die 100 to align the pre-assembled unit cell group 10 in the vertical direction. It may be possible to easily perform the top datum alignment operation, i.e., the operation of aligning the upper surfaces 14 (the negative electrode surfaces) of the battery cells 12 to the same height for a welding process during or in the middle of the process of pressing the plurality of unit cell groups 10 in a direction, thereby ensuring assembly convenience.

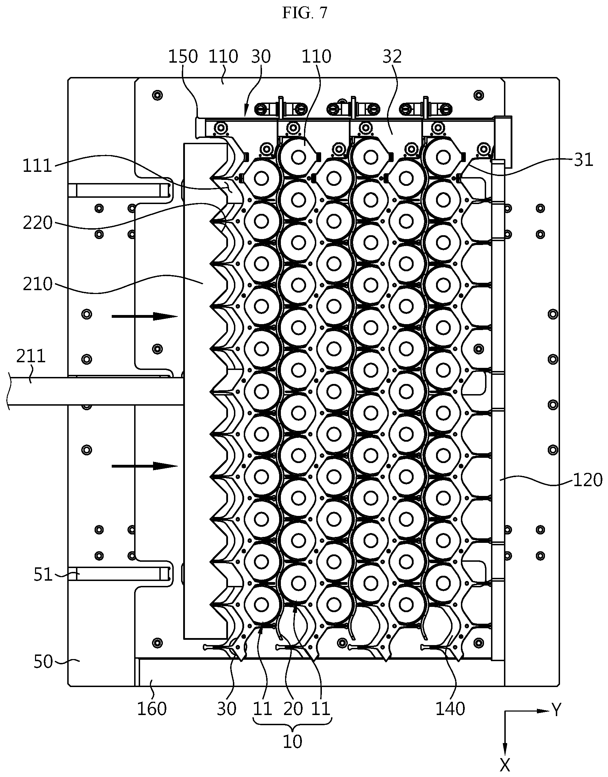

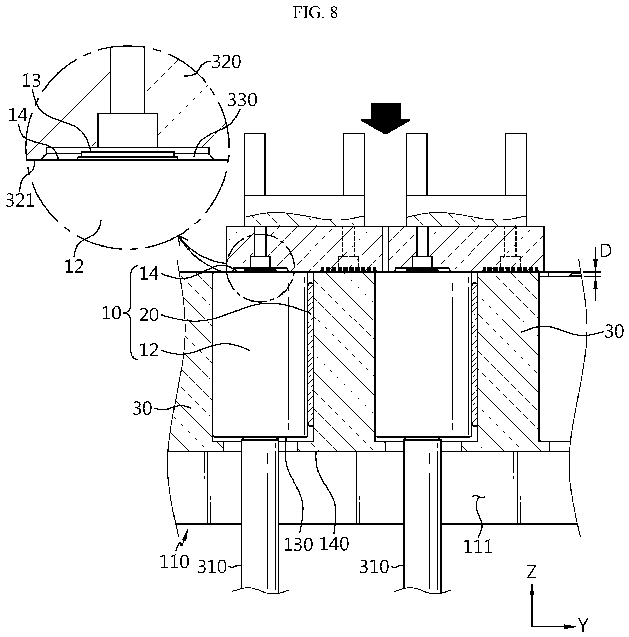

FIG. 7 is a diagram showing the press unit that presses the unit cell group mounted on the stack die in the apparatus for manufacturing the battery module according to an embodiment of the present disclosure, and FIG. 8 is a diagram schematically showing the operation of the alignment unit on the unit cell group in the apparatus for manufacturing the battery module according to an embodiment of the present disclosure.

Hereinafter, a process of manufacturing the battery module through the apparatus 1 for manufacturing the battery module according to this embodiment will be described with reference to FIGs. 1 to 8.

The method for manufacturing the battery module according to this embodiment may include a preparation step of preparing the unit cell group 10 including the battery cells 12 and the cooling tube 20 between the battery cells 12; a mounting step of mounting the plurality of spacers 30 and the plurality of unit cell groups 10 on the stack die 100; a pressing step of pressing the plurality of spacers 30 and the plurality of unit cell groups 10 in a direction through the press unit 200; and an alignment step of aligning, by the alignment unit 300, the upper surfaces 14 of the battery cells 12 by moving the unit cell group 10 up/down.

The preparation step is a step of forming the unit cell group 10. The unit cell group 10 may be formed by coupling two cell arrays 11 and one cooling tube 20. That is, a pair of cell arrays 11 may be arranged in a line side by side along the length direction (X axis direction) of the battery module with the cooling tube 20 interposed between them, and may be held together to form a unit cell group 10. The step of preparing the unit cell group 10 may be performed as pre-processing of the manufacturing process. In this case, the unit cell group 10 including the cell arrays 11 and the cooling tube 20 pre-coupled to each other may be provided to the apparatus 1 for manufacturing the battery module of this embodiment.

The preparation step may further include applying a resin material for adhesion or a structuring resin to the unit cell group 10.

Subsequently, the mounting step is performed. In the mounting step, the plurality of spacers 30 and the plurality of unit cell groups 10 may be mounted on the stack die 100. In this instance, on the basis of FIG. 5, the spacer 30 may be mounted at a location adjacent to the stopper plate 120 and the unit cell group 10 may be mounted on the left side of the spacer 30. In the mounting step, the spacer 30 and the unit cell group 10 may be mounted in a subsequent order from right to left.

Describing in detail, first, the spacer 30 is mounted on the rightmost spacer mounting portion 140 inside the stack die 100. In this instance, the right surface of the spacer 30 may be substantially disposed in contact with the stopper plate 120, and there may be a small gap in the left-right direction (Y axis direction). Additionally, the unit cell group 10 is mounted on the left side of the spacer 30. The unit cell group 10 may be mounted on the cell mounting portion 130, and the left concave recess portion 31 of the spacer 30 may be coupled to match the shape of one surface (right surface) of the unit cell group 10, i.e., the external convex shape of the battery cell 12. Additionally, another spacer 30 may be mounted on the left side of the unit cell group 10. The left-to-right (Y axis) mounting process is performed in a subsequent order to the left (-Y axis direction). The spacer 30, the unit cell group 10 and the spacer 30 are mounted in that order, and this step is performed until a preset number of unit cell groups 10 and a preset number of spacers 30 will be mounted. Additionally, on the leftmost side where the mounting is completed, the concave recess portion 31 of the spacer 30 may be exposed.

Subsequently, the pressing step is performed. The pressing step is a step of pressing the plurality of spacers 30 and the plurality of unit cell groups 10 in a direction through the press unit 200. Referring primarily to FIG. 6, the pressing step may be performed by the rightward movement of the press block 210. When the press block 210 applies the pressing force, the concave recess portion 31 is fitted between each convex protrusion portion 220 of the press block 210 and the pressing force is uniformly applied to the right side. Accordingly, the plurality of unit cell groups 10 and the plurality of spacers 30 may be held together in close contact with each other. It may be possible to achieve uniform level of close packing between the battery cells 12 and reduce the error rate, thereby improving assembly reliability.

Conventionally, the apparatus 1 for manufacturing the battery module including the press unit 200 according to the present disclosure was not proposed, and to press battery cells against each other, a press plate (a jig) is placed on two sides of adjacent battery cells and an operator tightens screws from the two sides to apply forces to the battery cells. Because the operator has to fasten the screws personally, it takes a lot of efforts and time and the level of pressing depends on the operator. According to the present disclosure, it may be possible to press the battery cells 12 against each other in an automated manner through the press block 210, thereby saving the effort and time and ensuring the constant level of pressing.

Finally, the alignment step is performed. Referring to FIG. 8, in the alignment step, when the actuation unit (not shown) operates for upward movement, the lift rod 310 may be extended upward and the unit cell group 10 in contact with the other end may be moved up. Because the end of the lift rod 310 is connected to a point on the bottom of the unit cell group 10, during the operation of the lift rod 310, the spacer 30 cannot move in the vertical direction and only the unit cell group 10 may be moved up with respect to the spacer 30 and aligned.

The stopper block 320 may be disposed above the stack die 100. During the alignment operation, the stopper block 320 may move down to the predetermined height (in the solid arrow direction in FIG. 8). Additionally, by the operation of the lift rod 310, the unit cell group 10 moves up and the stopper block 320 comes into contact with the upper surface 14 of the unit cell group 10 to stop the unit cell group 10 from moving up.

Here, through the recessed portion 330 present in the bottom surface 321 of the stopper block 320, the tab portion 13 may avoid contact and the upper surface 14 of the battery cell 12 and the bottom surface 321 of the stopper block 320 may be supported in contact with each other.

The bottom surface 321 of the stopper block 320 may be the reference surface for aligning the upper surfaces of the battery cells to the same height. Before the operation of the lift rod 310, as shown on the right side of FIG. 8, there may be a gap D between the reference surface and the upper surface 14 of the battery cell 12. When the unit cell group 10 is moved up with respect to the spacer 30 by the operation of the lift rod 310, the upper surface 14 of the battery cell 12 and the bottom surface 321 of the stopper block 320 may be brought into contact with each other to remove the gap D, so the upper surfaces 14 of all the battery cells 12 in the unit cell group 10 may lie on the same plane.

Conventionally, the apparatus 1 for manufacturing the battery module including the alignment unit 300 according to the present disclosure was not proposed, and to level the surfaces of battery cells at the same height, a top pressing method using the gravitational force by placing the press plate (the jig) on top and bottom of the battery cells and applying forces by tightening screws by the operator has been used. Because the operator has to tighten screws personally, it takes a lot of efforts and time and the level of pressing depends on the operator. Additionally, the upper press plate is heavy. According to the present disclosure, it may be possible to align the upper surfaces 14 of the battery cells 12 to the same plane in an automated manner through the alignment unit 300, thereby saving the effort and time and ensuring the constant level of pressing all the way. Additionally, it is possible to eliminate the need for the heavy upper press plate, thereby reducing the cost and weight of the jig.

The alignment step may be performed in parallel to the pressing step. The alignment step may be performed before the start of the pressing step, and the alignment step may be performed before the completion of the pressing step after the pressing step has been performed. For example, after the plurality of unit cell groups 10 and the plurality of spacers 30 are pressed by the application of a smaller pressing force than the maximum pressing force, the alignment step may be performed, and after the completion of the alignment step, the pressing step may be performed. In the pressing step, in case in which the press block 210 applies the maximum force to the right (on the basis of FIG. 7), the plurality of unit cell groups 10 and the plurality of spacers 30 are brought into close contact with each other, making it impossible to move and align the unit cell group 10 in the vertical direction with respect to the spacer 30. Accordingly, the pressing step and the alignment step may be performed in parallel.

Additionally, immediately after the mounting step, the stopper block 320 may move down to the predetermined height and get ready to align the upper surfaces of the battery cells to the same height, and after the pressing step is completed, the alignment step may be completed by the operation of the lift rod 310.

By this step, the plurality of unit cell groups 10 may be mounted on the stack die 100, then pre-aligned and pressed with the constant pressing force by the press unit 200, thereby achieving uniform level of close packing between the battery cells 12 and reducing the error rate, thereby ensuring assembly reliability.

Additionally, it may be possible to increase efficiency in the operation, ensure assembly convenience and improve productivity by automation of the top datum alignment operation of aligning the upper surfaces of the battery cells to the same height for a welding process during or in the middle of the process of pressing the plurality of unit cell groups 10 in a direction.

Meanwhile, the apparatus for manufacturing the battery module according to the present disclosure may be used in an apparatus for manufacturing a battery pack.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

The terms indicating directions such as upper, lower, left, right, front and rear are used for convenience of description, but it is obvious to those skilled in the art that the terms may change depending on the position of the stated element or an observer.

**[List of Reference Numerals]**

| | | | |
|---|---|---|---|
| 10: | Unit cell group | 11: | Cell array |
| 12: | Battery cell | 13: | Tab portion |
| 14: | Upper surface | | |
| 50: | Support | 51: | Die alignment protrusion |
| 100: | Stack die | 110: | Die body |
| 111: | Slot | 120: | Stopper plate |
| 130: | Cell mounting portion | 140: | Spacer mounting portion |
| 150: | Origin block accommodating portion | 160: | Front stopper |
| 200: | Press unit | 210: | Press block |
| 211: | Press rod | 220: | Convex protrusion portion |
| 300: | Alignment unit | 310: | Lift rod |
| 320: | Stopper block | 321: | Bottom surface |
| 330: | Recessed portion | 340: | Connection rod |

## Claims

1. An apparatus for manufacturing a battery module, comprising:
a stack die on which a unit cell group is mounted, the unit cell group including a plurality of battery cells and a cooling tube attached to the plurality of battery cells;
a press unit configured to press a plurality of the unit cell groups and a spacer disposed between the unit cell group and the adjacent unit cell group in a direction; and
an alignment unit configured to align upper surfaces of the battery cells to a same height by moving the battery cells up/down.

2. The apparatus for manufacturing the battery module according to claim 1, wherein the alignment unit is configured to move the unit cell group up/down with respect to the spacer.

3. The apparatus for manufacturing the battery module according to claim 2, wherein the alignment unit includes a stopper block, and wherein the stopper block is disposed above the stack die and moves up/down with respect to the stack die.

4. The apparatus for manufacturing the battery module according to claim 3, wherein the alignment unit further includes at least one lift rod having one end that is moved up/down by an actuation unit, and other end that contacts a lower surface of the unit cell group.

5. The apparatus for manufacturing the battery module according to claim 4, wherein the lift rod moves the unit cell group up.

6. The apparatus for manufacturing the battery module according to claim 4, wherein the stopper block moves down and comes into contact with the upper surface of the unit cell group to stop the unit cell group from moving up during the operation of the lift rod.

7. The apparatus for manufacturing the battery module according to claim 4, wherein the battery cell has a tab portion on the upper surface, the tab portion being protruded upward, and
wherein the stopper block has a recessed portion on the bottom surface to prevent a direct contact with the tab portion, the recessed portion being recessed inward.

8. The apparatus for manufacturing the battery module according to claim 2, wherein the press unit includes a press block, and
wherein the press block has a convex protrusion portion to match a shape of one surface of the spacer.

9. The apparatus for manufacturing the battery module according to claim 4, wherein the stack die includes:
a stopper plate bent on one side of a die body to form a reference surface when pressing the plurality of unit cell groups and the spacer in a direction;
a cell mounting portion protruded from an upper surface of the die body and on which the unit cell group is mounted; and
a spacer mounting portion disposed adjacent to the cell mounting portion and on which the spacer is mounted.

10. The apparatus for manufacturing the battery module according to claim 9, wherein the die body has a slot through which the lift rod passes.

11. The apparatus for manufacturing the battery module according to claim 9, wherein a height of a top surface of the spacer mounting portion is lower than that of the cell mounting portion.

12. The apparatus for manufacturing the battery module according to claim 9, wherein an alignment origin block is disposed on one side of the spacer in a length direction, and
wherein the stack die has an origin block accommodating portion accommodating the alignment origin block.

13. The apparatus for manufacturing the battery module according to claim 1, wherein the battery cell is a cylindrical secondary battery, the plurality of battery cells is arranged in a line side by side along a length direction of the battery module to form a cell array, and the unit cell group includes a pair of cell arrays and the cooling tube disposed between the pair of cell arrays,
wherein the spacer has a concave recess portion on each of one surface and other surface in the length direction to match an external shape of the unit cell group, and an alignment origin block is disposed on one side in the length direction, and
wherein a front stopper is disposed at a front side of the stack die, and an origin block accommodating portion accommodating the alignment origin block is disposed at a rear side of the stack die.

14. The apparatus for manufacturing the battery module according to claim 13, wherein the stack die is disposed on a support having a plurality of die alignment protrusions.

15. The apparatus for manufacturing the battery module according to claim 13, wherein the stack die includes a stopper plate on one side of the die body to form a reference surface when pressing the plurality of unit cell groups and the spacer in a direction,
wherein the press unit includes a press block on other side of the die body to press the plurality of unit cell groups and the spacer against the stopper plate, and
wherein the press block has a convex protrusion portion to match a shape of one surface of the spacer.

16. A method for manufacturing a battery module, comprising:
a preparation step of preparing a unit cell group including battery cells and a cooling tube between the battery cells;
a mounting step of mounting a plurality of spacers and a plurality of the unit cell groups on a stack die;
a pressing step of pressing the plurality of spacers and the plurality of unit cell groups in a direction through a press unit; and
an alignment step of aligning, by an alignment unit, upper surfaces of the battery cells by moving the unit cell group up/down.

17. The method for manufacturing the battery module according to claim 16, wherein before the pressing step is completed, the alignment step is performed.

18. The method for manufacturing the battery module according to claim 16, wherein the pressing step is performed by moving a press block of the press unit from one side of the plurality of unit cell groups and the plurality of spacers in a state that a reference surface for the plurality of unit cell groups and the plurality of spacers is provided.

19. The method for manufacturing the battery module according to claim 16, wherein the alignment step is performed by moving the unit cell group up/down with respect to the spacer by operation of a lift rod of the alignment unit on a lower surface of the unit cell group.
